**Europäisches Patentamt**

**European Patent Office**

**Office européen des brevets**

(19)

(11) **EP 0 782 671 B2**

(12) **NEUE EUROPÄISCHE PATENTSCHRIFT**

(45) Veröffentlichungstag und Bekanntmachung des Hinweises auf die Entscheidung über den Einspruch:
**28.05.2003 Patentblatt 2003/22**

(45) Hinweis auf die Patenterteilung:
**28.07.1999 Patentblatt 1999/30**

(21) Anmeldenummer: **96913422.0**

(22) Anmeldetag: **17.05.1996**

(51) Int Cl.7: **F04B 49/06**, B29C 45/82

(86) Internationale Anmeldenummer:
**PCT/CH96/00193**

(87) Internationale Veröffentlichungsnummer:
**WO 97/005387 (13.02.1997 Gazette 1997/08)**

(54) **VORRICHTUNG ZUM KONTROLLIERTEN ANTRIEB WENIGSTENS EINER HYDRAULISCHEN ACHSE**

DEVICE FOR THE CONTROLLED DRIVING OF AT LEAST ONE HYDRAULIC SHAFT

DISPOSITIF POUR l'ENTREINEMENT CONTROLE D'AU MOINS UN ARBRE HYDRAULIQUE

(84) Benannte Vertragsstaaten:
**AT CH DE ES FR GB IT LI**

(30) Priorität: **16.05.1995 CH 142095**
**19.02.1996 WOPCT/CH96/00054**

(43) Veröffentlichungstag der Anmeldung:
**09.07.1997 Patentblatt 1997/28**

(73) Patentinhaber: **Globemag L.P.**
**Edinburgh EH3 7TW (GB)**

(72) Erfinder:
• **TRUNINGER, Rolf**
**CH-2542 Bettlach (CH)**
• **TRUNINGER, Paul**
**CH-4512 Bellach (CH)**
• **SIEGRIST, Ronald**
**CH-9242 Oberuzwil (CH)**
• **STILLHARD, Bruno**
**CH-9011 St. Gallen (CH)**

(74) Vertreter: **Ackermann, Ernst, Dipl.-Ing. HTL**
**Patentanwalt**
**Egghalden**
**9231 Egg-Flawil (CH)**

(56) Entgegenhaltungen:
**EP-A- 0 403 041      EP-A- 0 464 286**
**EP-A- 0 574 623      EP-A- 0 649 723**
**DE-A- 4 335 328      DE-C- 4 335 403**

**EP 0 782 671 B2**

Printed by Jouve, 75001 PARIS (FR)

## Beschreibung

### Technisches Gebiet

Die Erfindung betrifft eine Vorrichtung gemäß dem Oberbegriff des Anspruchs 1.

### Stand der Technik

Erbauer von Maschinen verwenden regelbare Antriebe, mit denen die mechanischen Grössen (Kraft und/oder Position) einzelnen Achsen oder Freiheitsgraden der Maschine aufgeprägt werden können. Im Vordergrund stehen dabei elektrische und hydraulische Antriebe. Die Existenz beider Zweige beweist, dass nicht alle Argumente auf nur einer Seite liegen können. Elektromotorische Regelantriebe sind bei der Umsetzung der rotativen Bewegung in eine lineare Bewegung vor allem bei grossen Übertragungskräften im Nachteil. Der grosse Nachteil der hydraulischen Antriebe liegt bisher im energetischen Wirkungsgrad. Ein typisches Beispiel dieser Auseinandersetzung zeigt sich im Markt der Spritzgiessmaschinen. Firmen mit elektrotechnischem Hintergrund versuchen eine "all electric" Maschine auf den Markt zu bringen, die Konkurrenz wehrt sich mit "all hydraulic". Beide haben gute Argumente auf ihrer Seite. Analysiert man unvoreingenommen die Vor- und Nachteile der beiden Technologien, so ergeben sich beachtliche Unterschiede. Von den hydraulischen Antrieben ist bekannt, dass sie eine sehr hohe Leistungs- und Kraft- resp. Momenten konzentration aufweisen (Leistung, Kraft oder Moment pro Gewicht resp. Volumen der entsprechenden Komponenten). Diesem Umstand verdankt die Hydraulik ihre Dominanz bei Antrieben mit hohen Kräften, wie sie z.Bsp. bei Pressen und Spritzgiessmaschinen benötigt werden. In diesem Bereich weisen hydraulische Antriebe auch überlegene mechanische Wirkungsgrade und eine äusserst hohe Robustheit auf. Stellglieder und Sensoren für hydraulische Grössen sind zudem preiswert, wenn man von Servo- oder Regelventilen absieht. Die Regelung der Leistung bei hydraulischen Antrieben (P/Q bzw. Druck oder Förderstrom) erfolgt über dissipative Stellglieder wie Servoventile oder Proportionalventile. Je nach Leistungsbedarf des Antriebes wird dabei mehr oder weniger hydraulische Leistung über den Drosselkanten der Ventile nichtreversibl in Wärme umgewandelt. Das bedeutet nicht nur Energieverlust (respektive Dissipation) sondern auch störende Wärme, die mit zusätzlichen Einrichtungen abgeführt werden muss. Die Stellglieder schalten relativ langsam und benötigen hohe Energien zur Ansteuerung. Einen Ausweg sucht die hydraulische Antriebstechnik durch den Einsatz von Verstellpumpen. Die Verlustleistungen können damit zwar reduziert werden, doch bleiben auch hier verlustbehaftete Einrichtungen im System, wie etwa der Verstellantrieb der Pumpe oder eine Stützpumpe zum Aufrechterhalten des Druckes für die Stellglieder.

in der weit überwiegenden Zahl der praktischen Anwendungen haben sich für die zwei Antriebstechniken aber noch eine besondere Eigentümlichkeit ergeben, wie an Hand von zwei Beispielen der jüngsten Entwicklung veranschaulicht werden kann. Die DE-PS Nr. 4 303 760 zeigt einen hydraulischen Antrieb mit einem offenen hydraulischen Kreis. Dabei saugt die Pumpe das Oel direkt aus dem Tank. Die Pumpe fördert das Medium über eine Druckregeleinrichtung, welche aus Überdruckventil sowie einem Druckregelventil als Pilotventil (elektrisch gesteuertes Proportional-Druckeinstellventil) bestehen. Das Pilotventil wird über eine Signalleitung von einer Intelligenz bzw. einem Rechner angesteuert. Zwischen Ventil und Arbeitszylinder mit der zu bewegenden Achse bzw. Masse befindet sich eine Wegelogik. Auch diese wird über den Rechner elektrisch gesteuert. Die eigentliche Regelung findet durch Verarbeitung sowohl eines Geschwindigkeits- wie Wegsignales und entsprechendem Istwert/Sollwertvergleich im Rechner und entsprechender Ansteuerung der Ventilgruppe statt. Auf den kürzesten Nenner gebracht, erfolgt die Steuerung/Regelung bei einem offenen hydraulischen Antrieb über intelligente Ventile. Als Gegenstück zeigt die EPA 643 472, einen sogenannten inteiligenten Drive für einen elektromotorischen Antrieb von einer oder mehreren Achsen. Beide Lösungen führen zum Ziel, nämlich die Beherrschung der Steuer-/Regelvorgänge in einem höheren Grade und haben den Praxisbeweis an derselben Maschine erbracht. Es konnte der Nachweis erbracht werden, dass eine voll elektrische Spritzgiessrnaschine gemäss WO94/22655 nur 20 bis 30 % der Antriebsenergie der entsprechenden hydraulischen Maschine des Standes der Technik benötigt. Die folgenden Druckschriften EP 649 723, EP 468 286, EP 574 623 sowie DE 195 24 395 und DE 43 35 403 weisen jede ein dissipationsbehaftetes hydraulisches Betriebssystem auf. Es findet bei den dynamischen Vorgängen eine hydraulische Steuerung der Leistung mit Ventilen mit Ventilen statt. P/Q wird nach Massgabe des Maschinenprogrammes berechnet und gesteuert.

Aus der DE 43 35 328 A1 ist eine Vorrichtung der eingangs genannten Art bekannt, bei der jedoch eine Bewegungsumkehr einer Achse nicht in die Maschinen Konzeption einbezogen ist. Diese schließt vielmehr ventile mit ein und damit auch die genannten Nachteile von Ventilsteuerungen.

### Darstellung der Erfindung

Der Erfindung wurde nun die Aufgabe gestellt, ein neues hochdynamisches und möglichst allgemein verwendbares Antriebskonzept zu entwickeln, das die Vorteile des offenen hydraulischen und des elektrischen Antriebes soweit wie möglich vereinigt, und die jeweiligen Nachteile vermeidet. Es wurde eine Optimierung der "Schnittstelle" zwischen den zwei gesucht, insbesondere für Antriebe mit Bewegungszyklen innerhalb von Sekunden, d.h. vor allem mit hohen Beschleunigungen/Verzögerungen.

Die erfindungsgemässe Lösung ist durch die Merkmale des Anspruchs 1 gekennzeichnet

Es wurde erkannt, dass die Leistungsregelung auf der elektrisch/ elektronischen Seite stattfinden muss, da diese in der Elektrik mit erstaunlich geringen Verlusten durchführbar ist. Dadurch aber fällt die Hauptverluststelle beim hydraulischen System weg, denn diese ist nachgewiesenermassen die Druckreduktion über die Stellventile. Nicht die Auf/Zu-Funktion einer Wegelogik sondern abgedrosselte Ströme durch ein Drosselventil verwandeln die Druckenergie in Wärmeenergie. Wärmeenergie ist, soweit es die meisten Verarbeitungsprozesse betrifft, verlorene Energie. Eine Energierückwandlung aus der Wärme in eine arbeitsfähige, technisch nutzbare Energie ist selten wirtschaftlich. Die neue Erfindung geht davon aus, dass die hydraulische Leistung über einen Steuer-/Regeleingriff des Antriebsmotores der Pumpe exakt nach momentan benötigten Mengen erzeugt wird, als Oelförderleistung (Q) resp. Oeldruck (p). Damit treten aber alle, bisher auf der hydraulischen Seite angefallenen Drosselverluste gar nicht mehr auf, da im Normalfall gar kein Drosselventil mehr benötigt wird. Der Oelkreis kann drosselfrei gestaltet werden, zumindest soweit es den Leistungsfluss betrifft. Ferner wurde erkannt, dass fürviele Anwendungen eine optimale Lösung nur in der Kombination der beiden Antriebstechnologien liegen kann. Moderne Leistungshalbleiter in der IGBT Technologie vermögen hohe Leistungen in wenigen Nanosekunden (10^-9 sec) zu schalten. Hier ist die Elektrotechnik der Hydraulik um mindestens 5 Grössenordnungen überlegen. Diese Überlegenheit resultiert unter anderem aus den unterschiedlichen Signalausbreitungsgeschwindigkeiten von elektrischer und hydraulischer Energie, welche sich ebenfalls um 5 Grössenordnungen unterscheiden. Entsprechend tief sind die benötigten Energien zum Schalten des Transistors, verglichen mit den Schaltenergien, die ein hydraulisches Ventil benötigt. Die schnellen Schaltvorgänge der Halbleiter ermöglichen eine verlustfreie resp. äusserst verlustarme Steuerung der Leistung in allen vier Quadranten. Die zugehörigen Schaltkreise und Techniken (z.Bsp. Pulsweitenmodulaton) sind allgemein bekannt. So kann insbesondere im Bremsbetrieb der Maschine die Bremsenergie gesteuert einem elektrischen Kondensator zugeführt oder ins elektrische Netz zurückgespiesen werden. Elektrische Antriebe weisen im Leerlauf resp. Stillstand viel geringere Verlustleistungen auf als hydraulische. Rein elektrische Antriebe haben aber auch einige Nachteile:

Die Umsetzung der Motorleistung in Bewegungen mit hohen Kräften ist nur mit teuren Getrieben möglich. Dies gilt insbesondere für lineare Bewegungen. Kräfte und Momente können nur ungenau über die elektrischen Grössen Strom und Spannung erfasst werden. Für eine hohe Regelqualität müssen spezielle Sensoren gebaut werden, die die hohen Endkräfte messen.

Bei einem Lastwechsel bringt das Getriebe wesentliche Hysteresen in den Positionsgrössen ein. Dies kann bei Regelungen um den Nullpunkt sehr störend sein.

Die neue Erfindung gestattet eine ganze Anzahl besonders vorteilhafter Ausgestaltungen. Es wird dazu auf die Ansprüche 2 bis 13 Bezug genommen.

Bevorzugt wird die Pumpe als eine hydraulische Innenzahnradpumpe ausgebildet. Innenzahnradpumpen weisen eine günstige Kinematik auf, die im Ansaug zu nur geringen Fluidbeschleunigungen führt, was die guten Saugeigenschaften und die grosse Kavitationsfreiheit begründet. Die Pumpe ist mit einem hydraulischen Stellglied z.Bsp. einem Zylinder oder einem Hydromotor verbunden, und saugt das Arbeitsfluid direkt aus einem Tank an, letzteres ein Merkmal eines offenen hyraulischen Systems. Es wurde von den Erfindern erkannt, dass bei sehr dynamischen Elektromotoren wie z.Bsp. einem Servomotor, in der Saugleitung ein hoher Unterdruck durch die Beschleunigung der Fluidsäule entsteht. Bei hohen Anforderungen müssen Pumpen eingesetzt werden, die eine gute Saugleistung aufweisen und dem drehzahlvariablen Betrieb auch bei hohen Drücken standhalten können. Dazu eignen sich ganz besonders Innenzahnradpumpen mit Zahnkranzlagerung. Mangelnde Saugleistungen der eingesetzten Pumpe müssten durch zusätzliche Massnahmen zur Druckbeaufschlagung des Tankes kompensiert werden. Der erfindungsgemässe Antrieb eignet sich hervorragend als 4-Quadrant-Antrieb für Antriebsaufgaben im ersten und zweiten Quadranten, d.h. wo Kräfte in nur eine Richtung geregelt werden müssen. Um den Anlorderungen des vier-Quadrant Antriebes zu genügen wird die hydraulische Gegenseite mit einem Potential beaufschlagt. Dieses kann z.Bsp. durch einen Druckspeicher, eine Feder oder eine Masse die einem Gravitationsfeld ausgesetzt ist bewerkstelligt werden. Die Ableitung des Potentials nach dem Weg definiert eine Kraft, die eine Steuerung/Regelung des neuen Antriebes in der anderen Bewegungsrichtung ermöglicht, also in den Quadranten drei und vier. Das System Elektromotor/ Pumpe arbeitet bei einer Bewegung in die positive Richtung nicht nur gegen äussere Kräfte, sondern gleichzeitig gegen die Potential kräfte, Die dabei zusätzlich geleistete Arbeit wird als potentielle Energie gespeichert werden und steht bei einer Bewegung in die negative Richtung zur Verfügung. Eine Besonderheit dieses Antriebes besteht darin, dass die Pumpe selbst nur noch im Zwei-Quadrantbetrieb arbeitet. Es erfolgt zwar eine Drehrichtungsänderung, nicht aber ein Lastwechsel in der Hydraulikpumpe oder in der Kupplung zwischen Motor und Pumpe. Dies ist aus regeltechnischen Gründen von Bedeutung, da sonst mit jedem Lastwechsel eine Unstetigkeit entsteht, welche sehr störend sein kann (Hysterese in den Positionsgrössen). Die neue Lösung ist ein aus elektrischen und hydraulischen Elementen aufgebauter 4-Quadrant-Antrieb zum Steuern und Regeln von einer oder mehreren Achsen von Maschinen. Um möglichst allgemein als Antriebselement Verwendung zu finden, wird vorgeschlagen, dass der Antrieb in allen vier Quadranten steuer/regelbar ist, d.h. dass der Antrieb in beiden Laufrichtungen der angetriebenen Maschinen mechanische Grössen aufprägen können, insbesondere Kräfte, Momente, Positionen, Drehwinkel, Position-Kraft-Zusammenhänge (Charakteristik) oder zeitliche Ableitungen dieser Grössen.

Gemäss einer anderen, ganz besonders vorteilhaften Ausgestaltung weist der hydraulische Kreis einen Aktuator auf, dessen Gegenseite mit einen Energiespeicher (bzw. ein Potential) druckbeaufschlagt ist der als Federspeicher betreibbar ist. Es können auch mehrere Aktuatoren über ein Energiespeichernetz an einen gemeinsamen Energiespeicher angeschlossen werden. Ferner ist es möglich, dass über den hydraulisch offenen Kreis mehr als eine Achse antreibbar ist, wobei wenigstens eine oder mehrere oder alle Achsen auch regelventillos betrieben werden können. Die neue Lösung erlaubt damit ganz neue Kombinationen, z.Bsp. dadurch dass die Leistung einer geregelten Leistungseinheit auf elektrisch, mechanische oder hydraulische Weise auf mehrere Aktuatoren umgeschaltet wird. Mehrere Antriebsachsen resp. Freiheitsgrade können mit nur einer regelbaren Leistungseinheit (Stellorgan) versorgt werden. Im hydraulisch offenen Kreis kann wenigstens ein Sicherheitsventil angeordnet werden als Schaltventil, oder Druckbegrenzungs- oder Notabschaltventil. Ebenso kann die Kraft auf den Aktuator über den hydraulischen Druck oder die Motorstromaufnahme gemessen, gespeichert und dazu ein Toleranzband festgelegt werden, zur Steuerung bzw. Überwachung des Aktuators, wobei bei Überschreitung des Toleranzbandes in der aktiven Aktuatorbewegung dieselbe gestoppt und/oder umgekehrt wird. Die Erfinder haben sich zur Aufgabe gestellt, gleichsam von der Hydraulik und der Elektromechanik das Beste zu nehmen und in einem sogenannten elektrohydraulischen Antrieb zu vereinen, der erlaubt, mechanische Leistung verlustarm zu steuern und zu regeln, und die eingebrachte Energie zu rekuperieren. Ziel war, dass die Kraft- und Leistungskonzentration, Robustheit und Kostenvorteile den Eigenschaften des hydraulischen Antriebes entsprechen. Die Vorrichtung gestattet den Bau eines Hybridantriebssystem, bei dem über die leistungselektronischen Elemente sowie einen Prozessrechner wenigstens eine vorzugsweise linear bewegte Achse hydraulisch dissipationstionsfrei und wenigstens eine weitere Achse elektromotorisch und/oder konventionell ventilgeregelt antreib- bzw. bewegbar ist. Ein weiterer sehr wichtiger Ausgestaltungsgedanke liegt darin, dass die Vorrichtung als Hybridantriebssystem ausgebildet wird, wobei über die leistungselektronischen Elemente sowie einen Prozessrechner wenigstens eine, bevorzugt linear bewegte Achse hydraulisch dissipationsfrei über die entsprechende Steuer-Rechnerintelligenz und wenigstens eine weitere Achse elektromotorisch antreib- bzw. bewegbar ist. Dies erlaubt, dass über die selbe Steuer/Regelintelligenz mehrere Achsen sequentiell über das hydraulische System und eine oder mehrere elektromotorische Achsen zeitlich unabhängig steuer/regelbar sind. Damit aber bekommt der Maschinenbauer erstmals eine vollständige Freiheit, unabhängig der Antriebstechnologie den optimalen Antrieb für die jeweilige Funktion zu wählen. Die Maschine kann qualitativ in eine höhere Stufe gebracht werden, mit nur einem einzigen Steuer/ Regelsystem bzw. nur einer Steuer/Regelphilosophie für das betreffende Systemteil. Das hydraulische Medium verliert seine bisherige Funktion als Flüssigkeitsdruckregter und wird zu einem angenähert starrem Hydraulikgetriebe das gleichsam um alle Ecken geführt werden kann. Je nach besonderen Kriterien können z. Bsp. alle rotierenden Achsen elektromotorisch und alle linear bewegten Achsen über das Hydraulikmedium angetrieben werden. Gemäss einer weiteren besonders vorteilhaften Ausgestaltung ist die Vorrichtung als Roboter/ Werkzeugmaschine insbesondere als Spritzgiessmaschine als Druckgiessmaschine, als Presse, als Testmaschine oder als Stewardplattform ausgebildet (die alle hochdynamische Bewegungsabläufe haben), wobei eine oder mehrere Achsen als hydraulisch bewegte Achse ausgebildet sind. Die Vorrichtung kann als Giessmaschine derart ausgebildet werden, dass das hydraulische Antriebssystem zur Formbewegung und Erzeugung der Formschliesskraft ausgelegt ist. In einer Variante kann die Vorrichtung als Giessmaschine ausgebildet werden, wobei der Prozessrechner zur sequentiellen Steuerung/Regelung des hydraulischen Antriebs z.Bsp. der Achsen Formspannen und/oder Einspritzen und/oder Schneckenrotation ausgelegt ist. In beiden Fällen ist es möglich, dass der Prozessrechner als Mehrachs-Drive-Rechner ausgebildet ist, zur Steuerung/Regelung von weiteren Servomotoren für einen elektromechanischen Antrieb von Aggregatverschiebungen und/oder Auswerfer und/oder Schneckenrotation und/oder Einspritzung.

**Kurze Beschreibung der Erfindung**

In der Folge wird die Erfindung nun an Hand von einigen Ausführungsbeispielen mit weiteren Einzelheiten erläutert. Es zeigen:

die Figur 1      einen Grundaufbau der neuen Erfindung;

die Figur 2      und 2a einen offenen Regelkreis des Standes der Technik mit Druckverlauf;

die Figur 3      und 3a schematisch die neue Erfindung mit Druckverlauf;

die Figur 4      der Hin- und Rücklauf bei einem Arbeitszyklus als Beispiel;

die Figur 5      und 5a ein Diagramm sowie ein Schema für die neue Erfindung;

die Figur 6      p/Q Diagramm über der Zeit für die neue Erfindung;

die Figur 7      ein Anwendungsbeispiel mit Mehrgrössenregler;

die Figur 8     Anwendungsbeispiel mit einer Pumpe und mehreren Aktuatoren;

die Figur 9     Einspritzeinheit mit hydroelektrischem Antrieb;

die Figur 10    Stewardplattform als Anwendungsbeispiel;

die Figur 11    Spritzgiessmaschine.

**Wege und Ausführung der Erfindung**

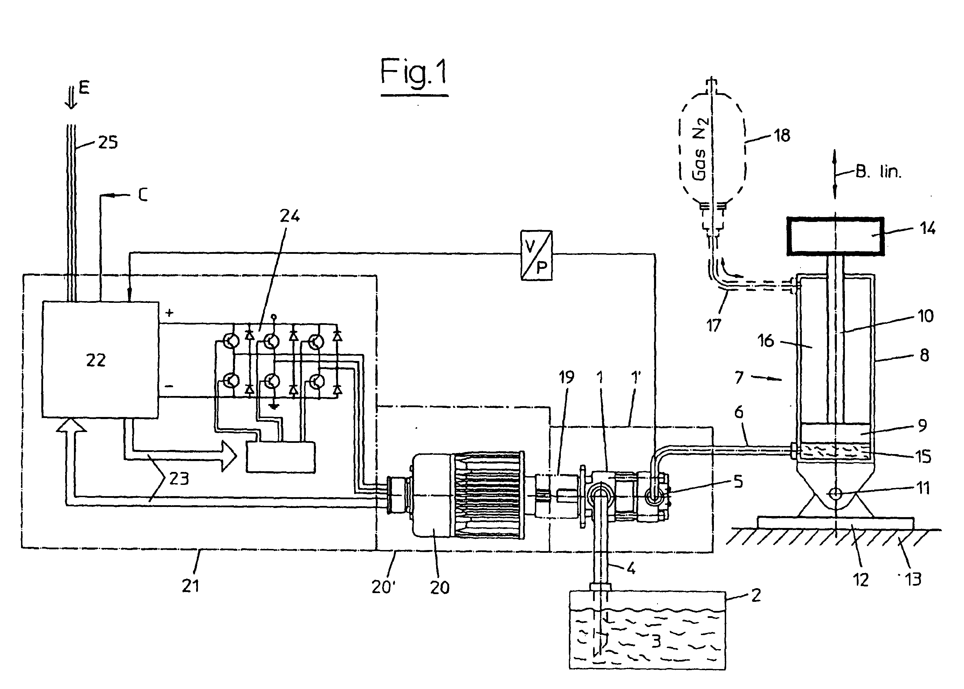

In der Folge wird nun auf die Figur 1 Bezug genommen, welche die Kernelemente der neuen Lösung veranschaulicht. Eine Hydraulikpumpe 1 saugt aus einem Tank 2 ein Hydraulikmedium 3 z.Bsp. Oel über eine Saugleitung 4 an, und gibt über einen Druckanschluss 5 sowie eine Druckleitung 6 das Druckmedium 3 an eine Achse 7 ab. Die Achse 7 stellt einen einfachen Aktuator dar mit einfachem Hydraulikzylinder 8, mit einem Kolben 9 und einer Kolbenstange 10 und ist über ein Drehgelenk 11 sowie eine Stützplatte 12 an einem Apparate- oder Maschinenteil bzw. Boden 13 abgestützt. Die Kolbenstange 10 ist direkt mit einem zu bewegenden Element resp. Arbeitselement 14 verbunden. Dem pumpenseitigen Druckmedium 15 steht ein kompressibles Gegendruckmedium 16 z.Bsp. Strickstoffgas gegenüber, das im Beispiel als vorzugsweise Lösung über eine Austauschleitung 17 in einen Akku 18 expandieren kann. Der Antrieb der Hydraulikpumpe 1 erfolgt über einen Antriebsmotor 20, der über eine Kupplung 19 mechanisch direkt mit der entsprechenden Antriebsachse der Pumpe 1 verbunden ist. Mit 1' ist strichpunktiert ein Druckerzeuger als ganzer bezeichnet, wie er gemäss Stand der Technik funktionsfähig ausgebildet ist. Mit 20' ist strichpunktiert der Pumpenantrieb mit Verstellung sowie den dazugehörigen Funktionselementen bezeichnet. Der strichpunktierte Kasten 21 enthält die leistungselektronischen Stellgliedern 24 sowie die Steuerregelintelligenz, die Stromumformung und/oder Energiespeichereinheit, welche im Kasten 22 subsummiert sind. Die Umwandlung von Wechselstrom aus dem elektrischen Netz in Gleichstrom erfolgt nach bekanntem Verfahren. Dabei ist auch die Speicherung von rückfliessender Energie in eine elektrischen Energiespeicher resp. Kondensator möglich. Die Steuer/Regelintelligenz steuert ein Netzwerk von Leistungstransistoren an. Über Signalleitungen 23 erfolgt der Input/Output der Stell- und Messgrössen wie z.Bsp. Drehwinkel, Drehzahl, Ströme oder Spannungen am Motor. Mit C ist eine Ein-/Ausgabe angedeutet, die als Computer resp. z.Bsp. als PC ausgebildet sein kann. Es findet beim gezeigten Beispiel eine mehrfache Energieumwandlung statt. Als erstes wird der von Netzstromanschluss 25 (als Wechselstrom) in Gleichstrom umgewandelt. Über die leistungselektronischen Elemente 24 werden entsprechend den Regelvorgaben im wesentlichen zeitgleich die elektromagnetischen Felder im Antriebsmotor erzeugt. Diese setzt die Energie in eine entsprechende mechanische Energie an der Antriebsachse der Pumpe 1 um, wo wiederum hydraulische Energie am Druckanschluss 5 der Pumpe 1 entsteht. Der Motor wirkt auf die Pumpe 1, die Oel aus einem Tank ansaugt und genau steuerbar direkt einem Hydraulikzylinder zuführt. Dieser Antrieb ermöglicht ohne Regelventile ein Steuern und Regeln aller mechanischen Grössen in allen vier Quadranten. Hydraulischen Stellglieder oder Schaltelemente gibt es dazu keine. Alle Steuer/Regelangaben werden auf der elektrischen Seite gelöst und über variable Drehgeschwindigkeiten bzw. Drehzahlen einer Pumpe mit konstantem Verdrängerungsvolumen zugeführt.

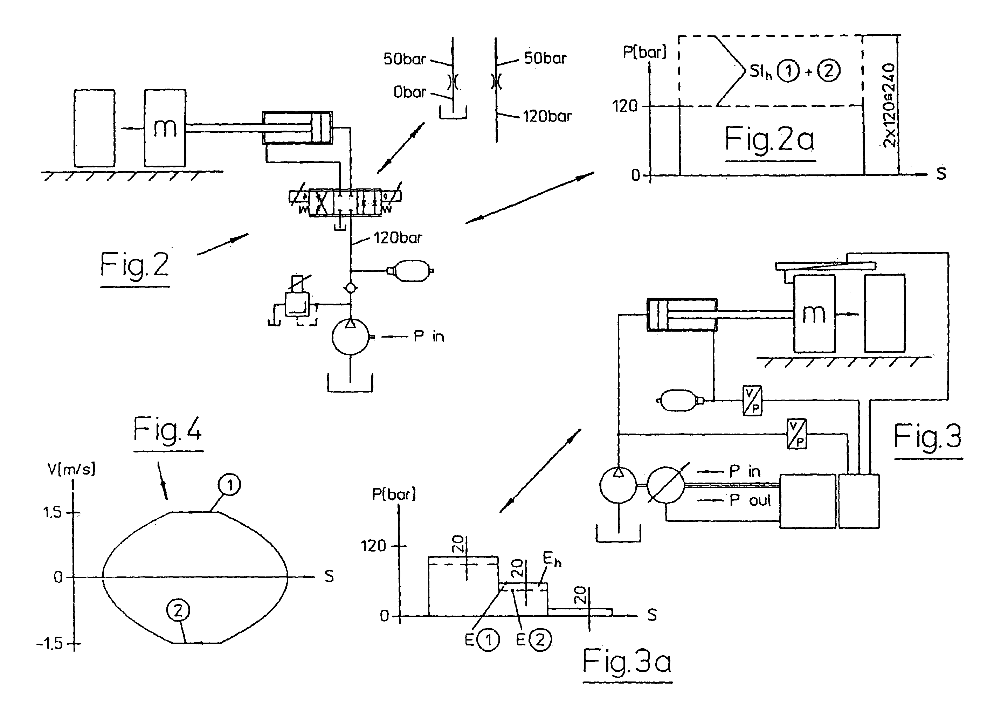

Die Figur 2 zeigt ein vereinfachtes Beispiel einer offenen hydraulischen Regelung des Standes der Technik.

Der zum Beispiel auf 120 bar gebrachte Druck wird im Effekt über Drosseln (Regelventile) auf 50 bar reduziert. Die Figur 3 zeigt ein Beispiel für die neue Lösung ohne Regelventil also regelventillos. Die Leistungsregelung findet hier vollständig auf der elektrischen Seite statt. Dieses System ist somit vollständig dissipationsfrei. In der Figur 3a sind Kraft und Druck über dem Weg für die erfindungsgemässe Lösung und in Figur 2a dem Stand der Technik gegenübergestellt. Dabei ist die Kurve Sth für den Stand der Technik und die Kurve Eh für die neue Erfindung. Deutlich zeigt sich beim Stand der Technik die hohe Verlustarbeit die zur Bewegung vor und zurück benötigt wird (repräsentiert durch 2 x 120 bar). Da bei der neuen Lösung sowohl die potentielle als vorallem auch die kinetische Energie der bewegten Masse m zurückgewonnen werden kann, bleibt zur Verschiebung der Masse lediglich die geringe Reibarbeit (am Schlitten) aufzubringen. Bei der maximalen Ausgestaltung bleibt bei der neuen Erfindung nur ein Bruchteil (20 bar) als nicht rückgewinnbare Energie, wenn sowohl über einen ganzen Zyklus, (vorwärts→ 1, rückwärts → 2) optimiert wird (Figur 3a und Figur 4).

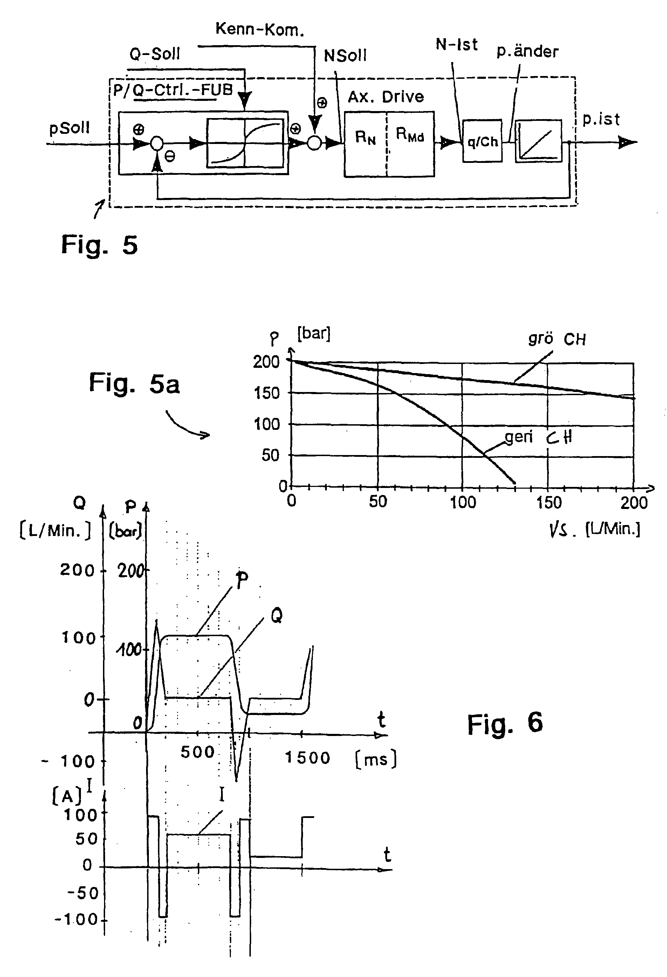

In der Folge wird nun auf die Figur 5 Bezug genommen, welche das Regelungskonzept der Servopumpenregler darstellt. Die Druckregelung des Servopumpenreglers gliedert sich in drei kaskadenartig verschachtelte Regelkreise (Figur 5). Die zentrale Hardwareeinheit besteht aus dem Achsdrive (A-Drive) und umfasst die beiden inneren Kreise der Drehmoment- und Drehzahlregelung (RN, RMd). Dabei ist die Drehzahlregelung (RN) der Momentenregelung (RMd) übergeordnet. Am Eingang der Drehmomentkontrolleinheit wird das digitale Stellsignal vom übergeordneten Drehzahlregler entsprechend dem Motorwinkel (Kommutierung) in zwei digitale Stromstellsignale aufgeteilt, und den beiden pulsweitenmodulierten Stromregelkreisen zugeführt. Die sich, wie erwähnt, ebenfalls im Drive befindende äussere Motordrehzahl regelung ist digital als PID-Regler ausgeführt. Den Sollwert erhält dieser Regler vom übergeordneten Druckkontroll-Baustein, der ein Digitalsignal in Umdrehungen pro Minute liefert. Der Drehzahlistwert wird über Differenzbildung des Resolversignals entsprechend dem absoluten elektrischen Motorwinkel gebildet. Abgetastet wird diese Stecke mit z.Bsp. 3 kHz.

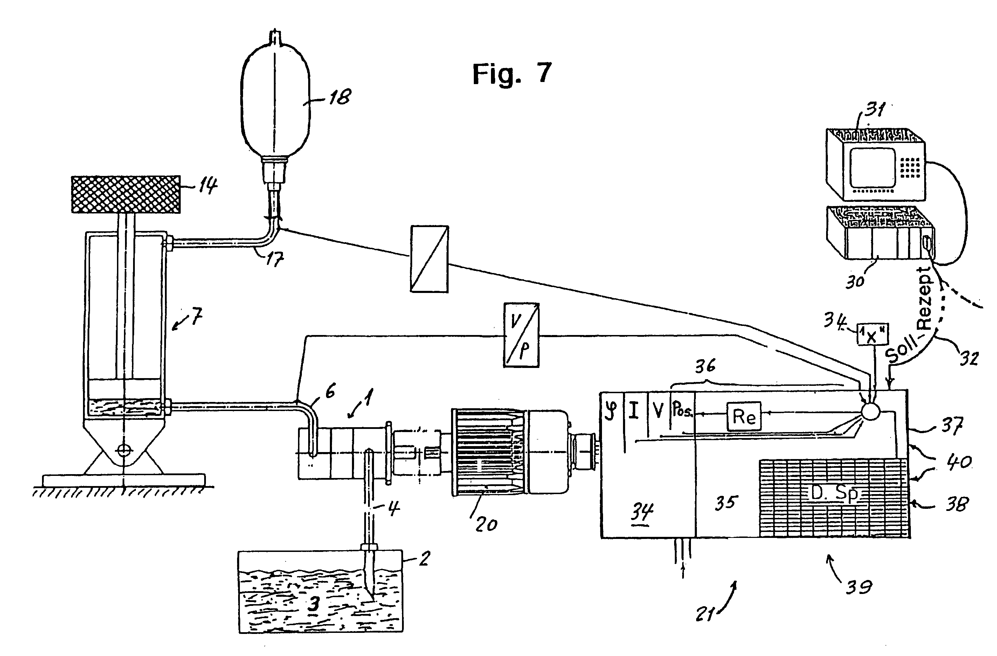

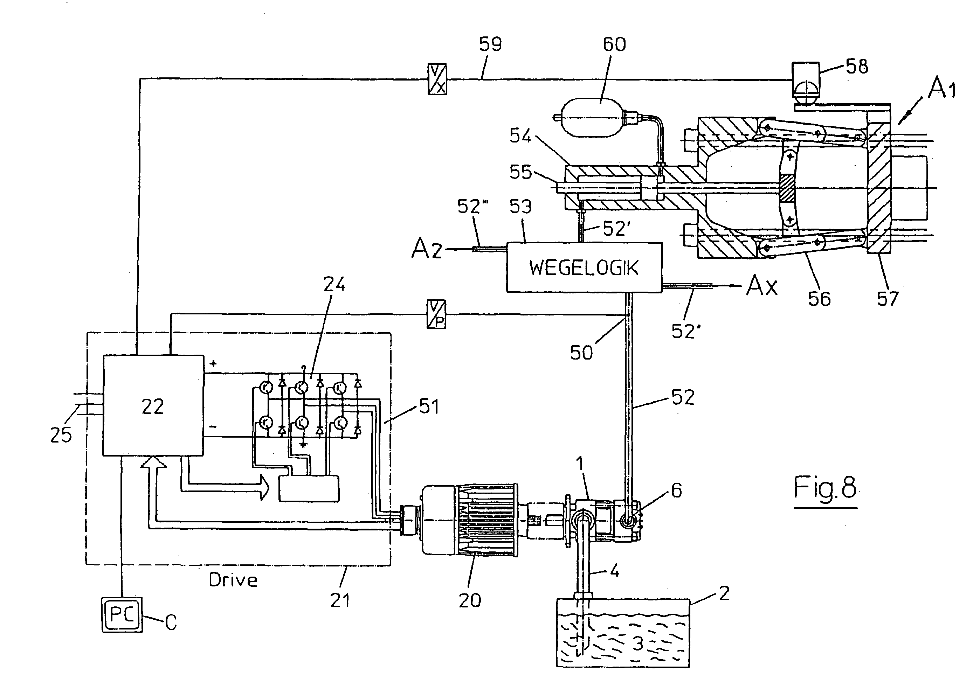

Wie nun aus den Anwendungsbeispielen gemäss Figur 7 und 8 erkennbar ist, ermöglicht die neue Lösung, zumindest bei Einschluss einiger Weiterausgestaltungsgedanken alle wichtigen Vorteile von elektrischen und hydraulischen Antrieben zu kombinieren. Auf der elektrischen/elektronischen Seite bestehen die folgednen Grundelemente, ein Maschinenrechner 30, ein Kommandogerät 31, ein Datenbus 32, Sensoren bzw. Sensoranschlüsse 33, ein Kontroller 34, eine Steuer/ Regeleinheit 35, ein Driverechner 36 mit dem Regler Re, eine Driveintelligenz 37, ein Kennfeld/Rezeptspeicher 38 mit einer Kontrolleinheit 40, welche zusammen einen Mehrgrössen-Prozesskontroller 39 bilden. Es gelang einen Antrieb zu schaffen, der die Eigenschaften von elektrischen und hydraulischen Antrieb derart kombiniert, dass ein neuer dynamischer Vier-Quadrant-Antrieb entsteht. Diese neue Kombination bietet wiederum neue Eigenschaften. Von den hydraulischen Antrieben erlaubt die neue Lösung insbesondere die folgenden Vorteile zu erhalten:

Hohe Leistungskonzentration (Leistung pro Volumen, resp. Leistung pro Gewicht des Aktors); hohe Kraftresp. Momentenkonzentration (Kraft pro Volument und/oder pro Gewicht des Aktors); kleines Einbauvolumen; hoher mechanischer Wirkungsgrad bei Antrieben wo relativ kleine Leistungen bei grossen Kräften oder Momenten aufgebracht werden müssen (hohe Untersetzungsverhältnisse bei mechanischen Getrieben sind verlustbehaftet); preiswerte und einfache Schaltung hoher Leistungen durch Schaltventile; die Grösse Druck und damit auch die Kraft (Kraftregelung) kann mit preiswerten Sensoren robust und genau gemessen werden. Unabhängig der Grösse oder Leistung des Antriebes können immer die gleichen Sensoren eingesetzt werden, da die typischen Drücke immer die selben sind. Für einen Hersteller eines ganzen Spektrums von Maschinen bedeutet das eine Substitution von Teilvielfalt durch höhere Stückzahlen (geringere Verwaltungskosten, bessere Einkaufsbedingungen); hohe Lebensdauer der Aktuatoren und Pumpen (Verschleiss-Festigkeit); mit Druckbegrenzungsventilen können genaue, zuverlässige und preiswerte Sicherheitsfunktionen gegen Überlast eingebaut werden; ganz generell lässt sich mit den mechanischen Grössen Druck und Volumenstrom durch Ventile eine Schaltlogik aufbauen. Das ist in dieser Art bei elektrischen Maschinen nur auf der elektrischen Seite, nicht aber auf der mechanischen Seite (Kraft und Geschwindigkeit) möglich.

Von den elektrischen Antrieben können folgende Vorteile übernommen werden: Moderne Leistungshalbleiter in IGBT Technologie ermöglichen hohe Leistungen in wenigen Nanosekunden ($10^{-9}$ sec) zu schalten. Hier ist die Elektrotechnik der Hydraulik um mindestens 5 Grössenordnungen überlegen; Signalausbreitung mit Lichtgeschwindigkeit $3 \cdot 10'^8$ m/sg, dies ist ebenfalls 5 Grössenordnungen über der von hydraulischen Systemen ($2\text{-}3 \cdot 10^3$ m/s); entsprechend tief sind auch die benötigten Energien zum Schalten des Transistors verglichen mit den Schaltenergien, die ein hydraulisches Ventil benötigt; die schnellen Schaltvorgänge bei den Leistungshalbleitern ermöglichen eine verlustfreie resp. verlustarme Steuerung der Leistung in allen vier Quadranten. Die verbreiteste Steuermethode ist dabei die Pulsweitenmodulation (PWM); allgemein bekannte Schaltungen dieser Leistungshalbleiter ermöglichen zudem, mechanische Bewegungsenergie gesteuert zu rekuperieren, indem beim Bremsbetrieb einer angetriebenen Maschine die Energie einem elektrischen Kondensator zugeführt oder aber als Drehstrom ins Netz zurückgeführt wird; praktisch verschwindende Leerlaufleistungen; mit dem weltumspannenden Netz, welches weitverzweigt in praktisch jeder Produktionsstätte zur Verfügung steht, kann zum Energiebezug wie auch zur Energiespeicherung benutzt werden. Damit entfallen Investitionskosten für entsprechende Elemente an der Maschine, wie Kondensatoren oder Druckspeicher. Es gelang die Nachteile des jeweils anderen Systems zu vermeiden. Insbesondere bei der Ausgestaltung der neuen Lösung als intelligenter vier-Quadranten-Antrieb ergeben sich eine ganze Anzahl teils auch unerwarteter Vorteile, z.Bsp.: Wegfallen von dissipativen Stellgliedern; mit dem Wegfallen von Servo und/oder Proportionalventilen sinken auch die Anforderungen an die Filterung. In vielen Fällen können Filter weggelassen werden. Wartungsarm, gutes Zeitverhalten (Verschleiss wird praktisch nur von der Pumpe bestimmt); leise (Verwendung leiser Konstantpumpen (IZP), keine lauten Regelpumpen oder mechanische Getriebe); Speicherdruck lässt sich überwachen, Lekkagen erkennen (Weg-Druckmessung); zwei Quadrant Betrieb an Pumpe und Motor, vier Quadrantantrieb; sehr geringe Hysterese bei einem von aussen aufgebrachten Lastwechsel; Hochdynamisch; offenes System, d.h. Medienaustausch, keine Hilfseinrichtungen wie Stellglieder für variable Pumpen, Hilfspumpen zur Ansteuerung der Stellglieder oder Druckhaltung; sehr einfacher und damit preiswerter Aufbau; sehr geringe Verlustleistungen bei tiefen Ausgangsleistungen, kompakte, leichte, preiswerte Aktuatoren; Kombinierbarkeit mit rein elektrischen Antrieben (gleiche Drives, Schnittstellen, elegante Mehrachsregelungen für hydraulisch und elektrische Antriebe; mit intelligenten Drives lassen sich ganze Bewegungsabläufe integrieren. Die übergeordnete Steuerung kann z.Bsp. auf ein einfaches digitales Signal reduziert werden, welches eine ganze Bewegung triggert; Versorgung mehrere hyraulischer Achsen Umschaltung; die Verlustleistungen im Stillstand beschränken sich auf äusserst geringe Leistungen zur Speisung der Drive Elektronik. Weder Motor noch Pumpe noch Zylinder produzieren überhaupt Verluste. Die Regelung von Kraft, Position und Geschwindigkeit über eine erfindungsgemässe Servopumpenanordnung mit Vier-Quadrant-Antrieb führten auch zu verschiedenen neuen Erkenntnissen bezüglich des Verhaltens eines hydraulischen Systems. Von den Anmeldern ist erkannt worden, dass die gleichzeitige Kontrolle obiger Grössen von entscheidender Wichtigkeit ist. Als besonders wichtig ist eine praktisch überschwingungsfreie Druckregelung bei vielen Anwendungen (wie z. B. beim Einpressvorgang der Spritzgiessmaschinen) als wichtig erkannt worden. Bei den hydraulischen Antrieben wird im weiteren allgemein durch die Regelung des Druckes dafür gesorgt, dass die Kräfte die vorgegebenen bzw. zulässigen Werte nicht übersteigen. Eine naheliegende Möglichkeit zur Regelung des Hydraulikdrucks besteht in der Modulation des Drehmomentsignals. Eine direkte Beeinflussung des Druckes über das Drehmomentstellsignal führt gemäss Untersuchungen der Anmelder aber meist zu tieffrequenten schlecht gedämpften Regelschwingungen, da die Massenträgheit von Motor und Pumpe zusammen im Zusammenhang mit der Elastizität im Hydrauliksystem an sich zu solchen schlecht gedämpften, tieffrequenten Eigenschwingungen neigt. Es ist einerseits erkannt worden, dass die Druckkontrolle über die Stellgrösse Pumpenvolumenstrom (als kennfeldkompensierter Wert) zu wesentlich besseren Ergebnissen führt. Um optimale Ergebnisse zu erzielen ist es von der Anmelderin erkannt worden, dass das die Stellgrösse Volumenstrom im wesentlichen nach folgender Funktion vom eingespannten Volumen und der Soll/Istabweichung vom Hydraulikdruck zu begrenzen bzw. zu stellen ist:

$$Qsoll = +/- k * \sqrt{|(psoll - pist) * (Vo * kc)|}$$

$$k = \sqrt{|(M_M| * q/(IT * \pi))}$$

MM:             Maximal zur Verfügung stehendes Beschleunigungs- und Verzögerungsdrehmoment des Motor u. a. abhängig vom Hydraulikdruck

q:              Pumpenfördervolumen pro Umdrehung

IT:             Gesamte Massenträgheit von Motor und Pumpe

Qsoll:          Pumpen Sollvolumenstrom (= Verbraucherstrom - Leckstrom)

psoll:          Hydraulischer Solldruck

pist:           Hydraulischer Istdruck

Ch = Vo * kc   "Hydraulische Kapazität"

Vo:             Eingespanntes Volumen

kc:             Kompressibilitätskoeffizient

Unter anderem haben Simulationsergebnisse gezeigt, dass dieses Verfahren sehr gute Resultate zeigt und mit der erfindungsgemässen Berücksichtigung des eingespannten Volumens bzw. der Elastizität im System optimale Resultate d. h. überschwingungsfreie Druckverläufe erzielt werden können. Versuche (Figur 6) haben gezeigt, dass dieses ein extrem genaue und schnelle Kontrolle des Druckes zur Folge hat. Damit im Bereich der Nullage die Stabilität des so entstandenen Regelkreises gewährleistet bleibt, geht diese Gleichung im Kleinsignalbereich in eine entsprechende Geradengleichung über. Nimmt während einer Bewegung der Verbraucherstrom ab im folgenden Beispiel bis auf Null, so wird beim neuen Verfahren mit Erreichen des vorgegebenen Solldruckes die Pumpe (abgesehen zur Förderung des Leckstromes) zum Stillstand kommen. Wichtig ist hier, dass der Zufluss (Volumenstrom) in den Hydraulikkreis bereits beim Zeitpunkt des Erreichen des eingestellten Druckwertes den nötigen tiefen Volumenstrom- bzw. Drehzahlwert erreicht und nicht erst nachher versucht wird, diesen schnellst möglich auf nahe Null zu bringen. Diese Entdeckung hört sich an und für sich sehr banal an, hat aber zwingend zur Folge, dass eine gewisse dem eingespannten Volumen indirekt proportionalen bzw. der Bremszeit der Pumpen/Motoreinheit proportionalen Druckvoröffnung nötig ist, um unzulässige dynamische Drucküberhöhungen zu vermeiden. Die statische Abregelkennlinie muss im Idealfall, wie mathematisch untermauert, im Grossignalbereich parabelförmig sein. Im Kleinsignalbereich muss gelten, dass die Regler - Verstärkung kleiner sein muss, damit die gesamte Kreisverstärkung kleiner als kp = 2*d*Wo bleibt. In der Gesamtverstärkung geht auch hier wieder 1/(Vo*kc) als Faktor ein. Messungen sowie theoretische Analysen zeigen auch hier, dass der Regelkreis im wesentlichen direkt proportional zum eingespannten Volumen einfacher beherrschbar wird.

Es wird nun auf die Figur 5a Bezug genommen. Von der Anmelderin ist erkannt worden, dass sich die störenden tiefen Eigenfrequenzen restlos beseitigen lassen, wenn bei der neuen Lösung staff der Stellgrösse Volumenstrom, als Stellgrösse der geregelte Druck verwendet wird zur Regelung der Geschwindigkeit (siehe auch DE-PS Nr. 43 03 760 ). An der kontrollierten Achse ist u. a. dazu ein Wegmesssytem vorhanden (Figur 8) das zur Erfassung der Geschwindigkeit einerseits sowie allenfalls zur übergeordneten Positionsregelung dient wobei alle drei Grössen nämlich Druck, Geschwindigkeit und Weg insgesammt ebenfalls vorzugsweise in Form des Mehrgrössenreglers (Figur 7) kontrolliert werden. Allenfalls kann bei spezifischen Achsen wie beim Formschluss auch auf eine Regelung des Druckes komplet verzichtet werden falls die Wegrückführung ein sicheres Bremsen vor der Zylinderendlage ermöglicht (Mehrgrössenregler). Als weitere Massnahme lässt sich beim Formschliessen bei Druck- und Spritzgiessmaschinen die Formschliessicherung sinngemäss ebenfalls einbringen.

Die Figur 8 zeigt ein Grundkonzept der neuen Erfindung für die Formbewegung. Das hydraulische Antriebssystem weist sinngemäss zu Figur 1 eine Pumpe, einen Servomotor mit Drive und einen Driverechner mit übergeordneter weiterer Intelligenz bzw. Speichern und allfälligen Busverbindungen auf. Es wird hierzu auf den Inhalt der EP-PS Nr. 643 472 verwiesen. Ein weiteres wichtiges Element ist ein Drucksensor 50, der durch die entsprechende Signalverarbeitung mit über Driverechner-Drive-Servomotor eine Druckregeleinheit 51 darstellt. Über eine Druckleitung 52 sowie einer Wegelogik 53 wird das Oel einem Hydraulikzylinder 54 zugeführt. Im Hydraulikzylinder 54 wird eine Kolbenstange 55 je nach Drucksteuerung gehalten oder bewegt und greift entsprechend an einer Schliesseinheit 56 für eine Form 57 an Position bzw. Weg- und Geschwindigkeit können über einen Positionssensor 58 sowie Signalleitung 59 dem Driverechner übermittelt werden. Z.Bsp. zur Mehrgrössenregelung des entsprechenden bewegten Teiles. Zusammen mit einer Gegendruckeinheit 60 wird der resultierende Beschleunigungsdruck insbesondere als Stellgrösse festgelegt. Die Schliesseinheit kann irgend eine Giessmaschine wie Spritz- oder Druckgiessmaschine oder z.Bsp. auch Blasmaschine sein. Es werden als hydraulische Grössen insbesondere Druck und die Position der bewegten Maschine erfasst und der Steuer/Regelintelligenz zugeführt. Eine Wegelogik ermöglicht die hydraulische Leistung mehrerer speziell betriebenen hydraulischen Aktuatoren zuzuführen. Auf einem PC können Messdaten der Steuer/Regelintelligenz verfolgt werden, oder aber Bewegungsprogramme für eine oder mehrere Achsen auf die Steuer/Regelintelligenz hinuntergeladen werden. Bei einer weiteren Ausführung des Antriebes können auch der Druck und die Ausfahrlänge des Zylinders der Steuer/Regelintelligenz zugeführt werden, um die Regelqualität des Systems zu erhöhen. Die Figur 8 zeigt sehr anschaulich, dass mit der neuen Erfindung einer der grössten Vorteile ein hydraulischer Antrieb im offenen Kreis nutzbar ist. Man benötigt nur eine Steuerregelintelligenz, eine Pumpe sowie einen Antriebsmotor. Bedient werden aber über ein Druckleitungsnetz 52', 52'', 52''' eine ganze Anzahl sequentiell betriebener Achsen $A_1$, $A_2$... $A_x$. Mit allen Vorteilen welche nun der kompakte Vororthydraulikzylinder bzw. Motor hat. Die Leistungsübertragung erfolgt zeitlich nacheinander über die Wegelogik.

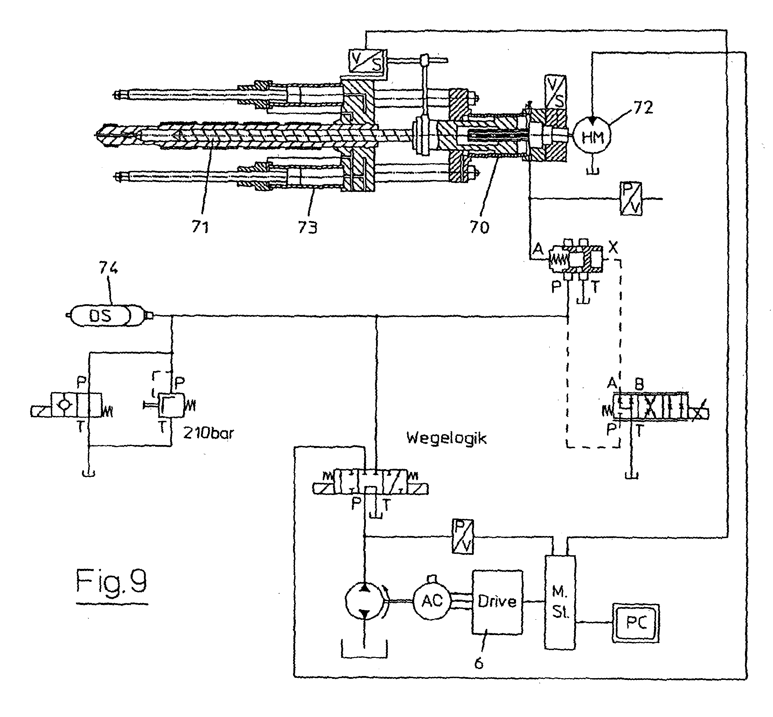

Die Figur 9 zeigt analog zu der Figur 8 über einen Hydraulikzylinder 70 eine Einspritzschnecke 71 linear bewegt bzw. gehalten. Die Rotationsbewegung erfolgt über ein Hydraulikmotor 72. Eine Andruckeinheit ist mit 73 bezeichnet und ein Akku mit 74. Mit gezeigtem Einsatz eines Akkus 74 können Achsen, mit nur einem Motor gleichzeitig betrieben werden. Die Figur 9 zeigt eine Antriebslösung, bei der wegen sehr hohen Anforderungen an die Dynamik einer Achse ein dissipationsbehaftetes Servoventil eingesetzt werden kann. Diese mit einem Druckspeicher versehene konventionelle hydraulische Schaltung kann jetzt mit einem erfindungsgemässen Antrieb über eine Wegelogik angesteuert resp. mit Energie versorgt werden. In den Zyklusphasen wo der Speicher voll ist, kann der gleiche erfindungsgemässe Antrieb zur Steuerung/Regelung des Schneckenantriebes oder aber zur Steuerung/Regelung weiterer dynamischer Vorgänge verwendet werden, wie z. Bsp. der Antriebseinheit 73, dessen Verbindungen zur Wegelogik nicht eingezeichnet sind.

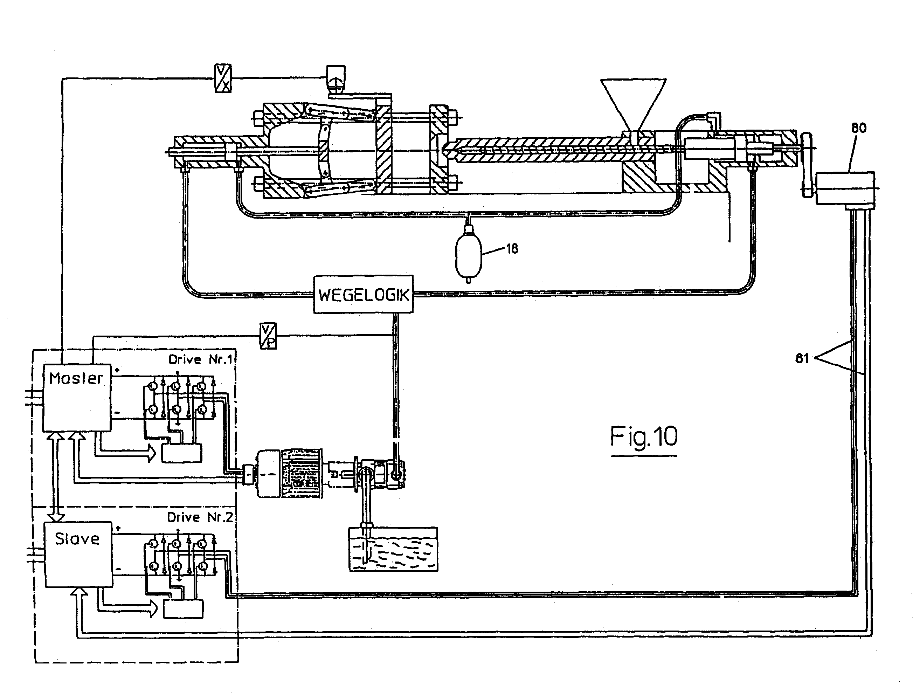

Die Figur 10 zeigt schematisch eine Hybridlösung als gemischt elektromotorisch-hydraulisch angetriebene Maschine. In der Figur 10 ist ein weiterer Servomotor 80 für die Rotationsbewegung der Einspritzschnecke 71 dargestellt. Der Servomotor 80 wird über die Signalleitung 81 von dem Driverechner gesteuert/geregelt. Die Figur 10 zeigt damit ansatzweise ein kombiniert elektromechanisch-hydraulisches Antriebssystem. Es kann jedoch eine beliebige Kombination gewählt werden. Welche Achse hydraulisch und welche elektromechanisch angetrieben wird, richtet sich nach den je spezifischen Rahmenbedingungen. Dieses Konzept gestattet auch bestehende hydraulische Maschinen evtl. schrittweise auf elektromechanische Antriebe umzurüsten.

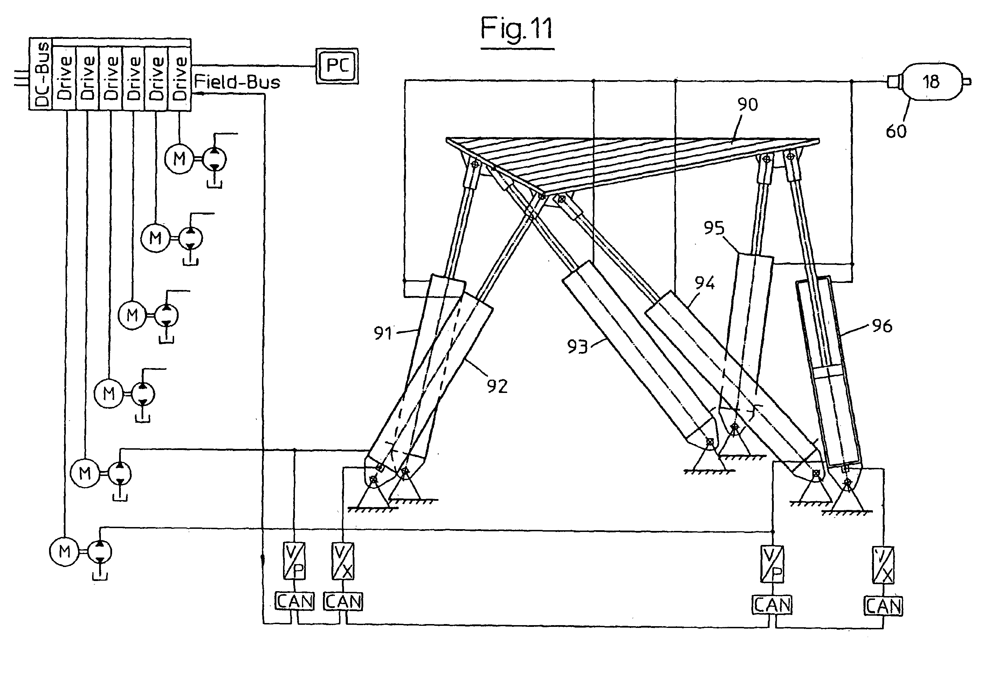

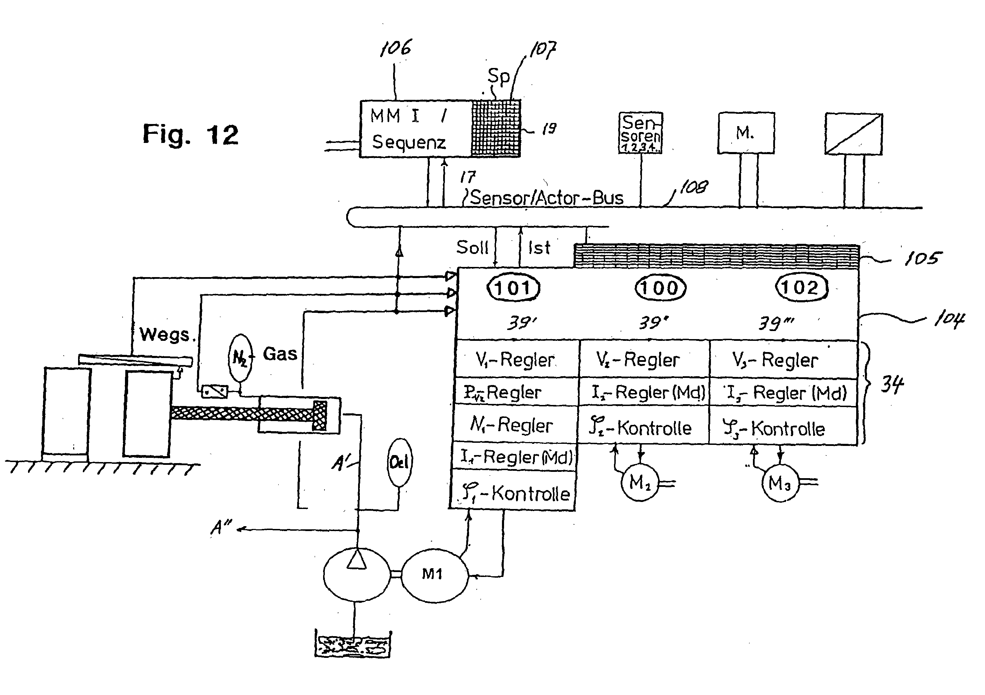

In der Folge wird nun auf die Figur 11 Bezug genommen, welche eine Stewardplattform 90 zeigt, die über sechs steuerbare Achsen 91 bis 96 bewegbar ist. Die Figur 11 zeigt einen speziellen Fall einer Roboterlösung wie sie z.Bsp. für Simulatoren verwendet werden. Für die sechs Achsen wird als Antriebslösung je ein erfindungsgemässer Antrieb eingesetzt. Zur Reduktion von Installationskosten werden gleiche Grössen in entsprechenden Bussen zusammengeführt. Eine einzige elektrische Energiespeicher/Energiequelle steht über einen DC-Bus allen Drives zur Verfügung. Nicht eingezeichnet ist die datentechnische Verbindung unter der Steuer/Regelintelligenz jedes Drives. Sie gestattet eine Synchronisation und Koordination der Bewegungen sämtlicher angeschlossener Achsen. Alle Achsen wirken erfindungsgemäss auf ein gemeinsames Druckspeichernetz, welches allen Achsen rückstossende, bzw. rücktreibende potentielle Kräfte aufprägt. Auch die Saugleitungen der Pumpen können über eine gemeinsame Saugleistung geführt werden (nicht eingezeichnet). Schliesslich können auch alle benötigten Sensor/Aktuatordaten des Antriebes über einem Feldbus der/den Achsrechnern zugeführt werden, resp. Von den Achsrechnern zu der Peripherie geschickt werden (z. Bsp. für die Kalibrierung von Sensoren). Solche Messdaten können z.Bsp. sein: Drücke, Ausfahrpositionen der Zylinder Drehzahlen der drehzahlvariablen Motoren oder Temperaturen im System.

**Patentansprüche**

1. Vorrichtung zum kontrollierten Antrieb wenigstens einer hydraulischen Maschinenachse (A', A'', Ax, 7, 91, 96), wobei mindestens ein hydraulischer Aktuator (7) über eine hydraulische Leitung (6) mit einer hydraulischen Pumpe (1) in Verbindung steht und die hydraulische Pumpe (1) von einem drehzahlvariablem Antriebsmotor (20) angetrieben wird, welcher von einer Steuer/Regelintelligenz angesteuert wird, wobei der Druck im Aktuator (7, 91-96) bzw. in der hydraulischen Leitung (6, 52, 52', 52'') in diese Steuerung/Regelung mit einfliesst, und wobei bei Bewegungsumkehr der Achse (A', A", Ax, 7, 91-96) eine Drehrichtungsänderung in der Hydraulikpumpe (1) nicht aber ein Lastwechsel in der Hydraulikpumpe (1) erfolgt.
**dadurch gekennzeichnet,**
**dass** im hydraulisch offenen Kreis die Steuerung/ Regelung der Leistung der wenigstens einen hydraulischen Maschinenachse gegen ein auf die hydraulische Gegenseite wirken des Potential (18) durch leistungselektronische Stellglieder (24) erfolgt.

2. Vorrichtung nach Anspruch 1,
**dadurch gekennzeichnet,**
**dass** sie eine Konstantvolumenpumpe aufweist, der Pumpenantrieb (20') über einen Servomotor (20) und die Steuerung/Regelung der Drehzahl bzw. Drehgeschwindigkeit über einen Prozessrechner (C/22, 30, 31) erfolgt und der hydraulisch offene Kreis regelventillos und wenigstens eine hydraulische Achse (A', A", Ax, 7, 91-96) als linear bewegte Achse (A', A", Ax) ausgebildet ist.

3. Vorrichtung nach einem der Ansprüche 1 oder 2,
**dadurch gekennzeichnet,**
**dass** die Steuer/Regelintelligenz einen Rechner/ Speicher (30, 31, 34 - 38) aufweist, wobei die Kennwerte der Pumpe (1) (insbesondere Leckstrom der Hydraulik als Funktion von Drehzahl, Druck, und Temperatur) in einem Rechner/Speicher ablegbar und als Kennfeldkompensation in der Drehzahlregelung des Antriebsmotores wirksam verwendbar sind.

4. Vorrichtung nach einem der Ansprüche 1 bis 3,
**dadurch gekennzeichnet,**
**dass** sie eine Innenzahnradpumpe aufweist und als 4- oder 2-Quadrant-Antrieb ausgebildet ist.

5. Vorrichtung nach einem der Ansprüche 1 bis 4,
**dadurch gekennzeichnet,**
**dass** der hydraulische Kreis mit einem Aktuator (7) ausgerüstet ist, dessen Gegendruckseite ein Energiespeicher, insbesondere einen Akku (18) aufweist, der als Federspeicher betreibbar ist.

6. Vorrichtung nach einem der Ansprüche 1 bis 5,
**dadurch gekennzeichnet,**
**dass** über den hydraulisch offenen Kreis mehr als eine Achse (A, A", Ax, 7, 91-96) antreibbar ist, wobei wenigstens eine oder mehrere oder alle Achsen (A', A", Ax, 7, 91-96) regelventillos betreibbar sind und/oder mehrere Aktuatoren über ein gemeinsames Gegendrucknetz verfügen.

7. Vorrichtung nach einem der Ansprüche 1 bis 6,
**dadurch gekennzeichnet,**
**dass** im hydraulisch offenen Kreis wenigstens ein Sicherheitsventil angeordnet und als Schaltventil, oder Druckbegrenzungs- oder Notabschaltventil ausgebildet ist und/oder dass die Kraft auf den Aktuator über den hydraulischen Druck oder die Motorstromaufnahme gemessen, gespeichert und dazu ein Toleranzband festgelegt wird, zur Steuerung bzw. Überwachung des Aktuators, wobei bei Überschreitung des Toleranzbandes in der aktiven Abktorbewegung dieselbe gestoppt und/oder umgekehrt wird.

8. Vorrichtung nach einem der Ansprüche 1 bis 7,
**dadurch gekennzeichnet,**
**dass** sie als Hybridantriebssystem ausgebildet ist, wobei über die leistungselektronischen Elemente sowie einen Prozessrechner wenigstens eine vorzugsweise linear bewegte Achse (7) hydraulisch und wenigstens eine weitere Achse (72) elektromotorisch und/oder konventionell ventilgeregelt antreib- bzw. bewegbar ist, und/oder über eine Steuer/ Regel intelligenz mehrere Achsen sequentiell über das regelventillose hydraulische System und zusätzlich eine oder mehrere elektromotorische Achsen zeitlich unabhängig steuer/ regelbar sind.

9. Vorrichtung nach einem der Ansprüche 1 bis 8,
**dadurch gekennzeichnet,**
**dass** der elektromotorische Antrieb (20) ein permanent erregten Servomotor, ein vektoriell geregelter Asynchronmotor, ein geregelter Gleichstrommotor, ein bürstenloser DC-Motor oder ein geschalteter Reluctance-Motor oder ein frequenzgesteuerter Motor sein kann.

10. Vorrichtung nach einem der Ansprüche 1 bis 9,
**dadurch gekennzeichnet,**
**dass** sie als Roboter, als Werkzeugmaschine, inbesondere als Spritzgiessmaschine, als Druckgiessmaschine, als Presse, als Testmaschine oder als Stewardplattform ausgebildet ist, bei der wenigstens eine oder mehrere Achsen als hydraulisch bewegte Achsen im offenen Kreis dissipationsfrei ausgebildet sind.

11. Vorrichtung nach einem der Ansprüche 1 bis 10,
**dadurch gekennzeichnet,**
**dass** sie als Giessmaschine ausgebildet ist, wobei bei einer oder mehreren Achsen, die mechanischen Grössen (p/Q) hydraulisch im offenen Kreis regelvenillos übertragen werden und/oder die Einspritzachse und/oder die Formschliessachse über ein dissipatives Ventil steuerbar ist, wobei besonders vorzugsweise alle Aktoren an ein Energiespeichemetz angeschlossen sein können.

12. Vorrichtung nach einem der Ansprüche 1 bis 4,
**dadurch gekennzeichnet,**
**dass** eine innen- oder aussenverzahnte, kompensierte oder nichtkompensierte Zahnradpumpe, eine konstante oder verstellbare Achsial- oder Radialkolbenpumpe, eine konstante oder regelbare Flügelzellenpumpe, eine Schraubenpumpe oder eine andere hydraostatische Verdrängereinheit eingesetzt wird.

13. Vorrichtung nach einem der Ansprüche 1 bis 12, zur Regelung des Geschwindigkeits- und/oder Wegprofils einer bewegten Masse (m) bei einer oder mehreren Achsen, z.B. der Schliessachse einer Spritzgiessmaschine mittels des auf der pumpenseitigen und auf der Gegenseite wirkenden Drukkes bewegt wird,
**dadurch gekennzeichnet,**
**dass** als Stellgrösse der hydraulische Druck der Flüssigkeit unter Berücksichtigung der Drücke sowohl auf der Druck- als auch auf der Gegendruckseite verwendet wird, wobei vorzugsweise der Regler als Mehrgrössenregler für Druck, Geschwindigkeit und Position ausgebildet ist bzw. die Achsen kontrolliert.

**Claims**

1. Apparatus for the controlled driving of at least one hydraulic machine shaft (A', A'', Ax, 7, 91, 96), wherein at least one hydraulic actuator (7) communicates via a hydraulic line (6) with a hydraulic pump (1) and the hydraulic pump (1) is driven by a variable speed driving motor (20) which is controlled by a control intelligent device, wherein the pressure in the actuator (7, 91-96) or in the hydraulic line (6, 52, 52', 52'') also flows into this control and wherein, with a reversal of movement of the shaft (A', A'', Ax, 7, 91-96), a change in the direction of rotation in the hydraulic pump (1) occurs but not a change in the load in the hydraulic pump (1) **characterised in that** in the hydraulically open circuit the power of the at least one hydraulic machine shaft is controlled by electronic power control elements (24) against a potential (18) acting on the hydraulic opposing side.

2. Apparatus according to claim 1, **characterised in that** it comprises a constant volume pump, the pump drive (20') takes place via a servomotor (20) and the speed of rotation is controlled via a process computer (C/22, 30, 31) and the hydraulically open circuit is designed without a control valve and at least one hydraulic shaft (A', A'', Ax, 7, 91-96) is designed as a linearly moved shaft (A', A'', Ax).

3. Apparatus according to one of claims 1 or 2, **characterised in that** the control intelligent device comprises a computer/memory (30, 31, 34-38), wherein the characteristics of the pump (1) (in particular leakage current of the hydraulic system as a function of speed, pressure and temperature) can be filed in a computer/memory and can be effectively used as characteristic field compensation in the speed control of the driving motor.

4. Apparatus according to one of claims 1 to 3, **characterised in that** it comprises an internal gear pump and is designed as a 4- or 2-quadrant drive.

5. Apparatus according to one of claims 1 to 4, **characterised in that** the hydraulic circuit is equipped with an actuator (7) of which the back-pressure side comprises an energy store, in particular a battery (18) which can be operated as a spring energy store.

6. Apparatus according to one of claims 1 to 5, **characterised in that** more than one shaft (A, A'', Ax, 7, 91-96) can be driven via the hydraulically open circuit, wherein at least one or a plurality of or all shafts (A', A'', Ax, 7, 91-96) can be operated without control valves and/or a plurality of actuators comprise a common back pressure network.

7. Apparatus according to one of claims 1 to 6, **characterised in that** at least one safety valve is arranged in the hydraulically open circuit and is designed as an on-off valve or pressure-limiting or emergency shut off valve and/or **in that** the force on the actuator is measured via the hydraulic pressure or the motor power consumption, is stored and a tolerance band determined for controlling or monitoring the actuator, the actuator movement being stopped and/or reversed when the tolerance band in the active actuator movement is exceeded.

8. Apparatus according to one of claims 1 to 7, **characterised in that** it is designed as a hybrid drive system, at least one preferably linearly moved shaft (7) being hydraulically drivable or movable and at least one further shaft (72) being drivable or movable by an electric motor and/or with conventional valve control via the electronic power elements and a process computer, and/or a plurality of shafts being controllable sequentially via the hydraulic system without control valves and additionally one or more electric motor operated shafts being controllable independently in time via a control intelligent device.

9. Apparatus according to one of claims 1 to 8, **characterised in that** the electric motor drive (20) can be a permanently excited servomotor, a vectorally controlled asynchronous motor, a controlled d.c. motor, a brushless d.c. motor or a switched reluctance motor or a frequency-controlled motor.

**10.** Apparatus according to one of claims 1 to 9, **characterised in that** it is designed as a robot, as a machine tool, in particular as an injection moulding machine, as a diecasting machine, as a press, as a test machine or as a steward platform, in which at least one or more shafts are designed as hydraulically moved shafts which are free from dissipation in the open circuit.

**11.** Apparatus according to one of claims 1 to 10, **characterised in that** it is designed as a casting machine wherein, in the case of one or more shafts, the mechanical variables (p/Q) are transmitted hydraulically in the open circuit without control valves and/or the injection shaft and/or the mould closing shaft is controllable via a dissipative valve, wherein all actuators can particularly preferably be connected to an energy store network.

**12.** Apparatus according to one of claims 1 to 4, **characterised in that** an internally or externally toothed, compensated or non-compensated gear pump, a constant or adjustable axial or radial piston pump, a constant or controllable vane pump, a screw pump or a different hydrostatic displacement unit is used.

**13.** Apparatus according to one of claims 1 to 12 for controlling the speed and/or distance profile of a moving mass (m) in the case of one or more shafts, for example the closure shaft of an injection moulding machine by means of the pressure acting on the pump side and on the opposite side is moved [sic], **characterised in that** the hydraulic pressure of the fluid is used as manipulated variable while allowing for the pressures on both the pressure and the back pressure side, the controller preferably being designed as a multiple variable controller for pressure, speed and position and controlling the shafts.

**Revendications**

**1.** Dispositif pour l'entraînement contrôlé d'au moins un arbre hydraulique (A', A'', Ax, 7, 91, 96), au moins un actionneur hydraulique (7) étant raccordé au moyen d'une conduite hydraulique (6) à une pompe hydraulique (1) et la pompe hydraulique (1) étant entraînée par un moteur d'entraînement à régime variable (20), lequel est excité par une intelligence de commande/réglage, dispositif dans lequel la pression se répand dans l'actionneur (7, 91 à 96) ou dans la conduite hydraulique (6, 52, 52', 52'') à l'aide de ce/cette commande/réglage, et où, lors de l'inversion de mouvement de l'arbre (A', A'', Ax, 7, 91 à 96), il se produit une modification du sens de rotation dans la pompe hydraulique (1) et non pas une alternance d'effort dans la pompe hydraulique (1), **caractérisé en ce que** dans un circuit hydraulique ouvert le/la commande/réglage de la performance du au moins un arbre hydraulique s'effectue à l'encontre d'un potentiel (18) agissant sur le côté hydraulique opposé au moyen d'organes de réglage d'électronique de puissance (24).

**2.** Dispositif selon la revendication 1, **caractérisé en ce qu'**il présente une pompe à volume constant, l'entraînement de pompe (20') s'effectuant au moyen d'un servomoteur (20) et le/la commande/réglage du régime et de la vitesse de régime s'effectuent au moyen d'un ordinateur industriel (C/22, 30, 31) et le circuit ouvert par voie hydraulique est configuré sans soupape de réglage et au moins un arbre hydraulique (A', A'', Ax, 7, 91 à 96) est configuré comme arbre mobile de manière linéaire (A', A'', Ax).

**3.** Dispositif selon l'une des revendications 1 ou 2, **caractérisé en ce que** l'intelligence de commande/réglage présente un/une ordinateur/mémoire (30, 31, 34 à 38), où les paramètres de la pompe (1) (en particulier le courant de fuite de la mécanique des fluides comme fonction du régime, de la pression et de la température) peuvent être placés dans un/une ordinateur/mémoire et où ils peuvent être efficacement utilisés comme compensation des champs caractéristiques dans le réglage du régime du moteur d'entraînement.

**4.** Dispositif selon l'une des revendications 1 à 3, **caractérisé en ce qu'**il présente une pompe à engrenages intérieurs et est configuré comme un entraînement à 4 ou 2 quadrants.

**5.** Dispositif selon l'une des revendications 1 à 4, **caractérisé en ce que** le circuit hydraulique est équipé d'un actionneur (7), dont le côté de contre-pression présente un accumulateur d'énergie en particulier un accumulateur (18), qui peut être utilisé comme ressort accumulateur.

**6.** Dispositif selon l'une des revendications 1 à 5, **caractérisé en ce que** plus d'un arbre (A, A'', Ax, 7, 91 à 96) peuvent être entraînés au moyen d'un circuit ouvert par voie hydraulique, au moins un ou plusieurs ou la totalité des arbres (A', A'', Ax, 7, 91 à 96) peuvent être actionnés sans soupape de réglage et/ou plusieurs actionneurs disposent d'un réseau de contre-pression commun.

**7.** Dispositif selon l'une des revendications 1 à 6, **caractérisé en ce que** dans le circuit ouvert par voie hydraulique est agencée une soupape de sécurité qui est formée comme une soupape de commutation ou comme soupape de limitation de pression ou d'interruption d'urgence et/ou **en ce que** la force exercée sur l'actionneur est mesurée, mémorisée au moyen de la pression hydraulique ou en relevant le courant de moteur, et ainsi on peut déterminer une plage de tolérances, pour la commande ou la surveillance de l'actionneur, le dépassement de la plage de tolérances dans le mouvement actif de l'acteur proprement dit s'arrête et/ou est inversé.

8. Dispositif selon l'une des revendications 1 à 7, **caractérisé en ce qu'**il est configuré comme un système d'entraînement hybride, dans lequel, au moyen d'éléments d'électronique de puissance tels qu'un ordinateur industriel, au moins un arbre (7), de préférence actionné de manière linéaire peut être entraîné ou déplacé hydrauliquement et au moins un autre arbre (72) peut être entraîné ou déplacé par un moteur électrique et/ou réglé par soupape de manière classique et/ou plusieurs arbres peuvent être commandés/réglés séquentiellement au moyen d'une intelligence de commande/réglage à l'aide du système hydraulique sans soupape de réglage et de plus un ou plusieurs arbres électromoteurs peuvent être commandés/réglés sans tenir compte du temps.

9. Dispositif selon l'une des revendications 1 à 8, **caractérisé en ce que** l'entraînement électromoteur (20) peut être un servomoteur excité en permanence, un moteur asynchrone réglé de manière vectorielle, un moteur de courant continu réglé, un moteur à courant continu sans suramplifcation brusque ou un moteur à réluctance commuté ou un moteur piloté en fréquence.

10. Dispositif selon l'une des revendications 1 à 9, **caractérisé en ce qu'**il est configuré comme un robot, comme une machine-outil, en particulier comme une machine à injection, comme machine à couler sous pression, comme presse, comme machine d'essai ou comme plate-forme principale, dans lequel le au moins un ou plusieurs arbres sont configurés sans dissipation comme des arbres mobiles hydrauliquement dans le circuit ouvert.

11. Dispositif selon l'une des revendications 1 à 10, **caractérisé en ce qu'**il est configuré comme une machine à couler, où pour un ou plusieurs arbres, les grandeurs mécaniques (p/Q) sont transmises hydrauliquement sans soupape de réglage dans le circuit ouvert et/ou l'arbre d'injection et/ou l'arbre de serrage de moule peut être commandé au moyen d'une soupape de dissipation, tous les acteurs pouvant être, de manière particulièrement préférée, reliés à un réseau accumulateur d'énergie.

12. Dispositif selon l'une des revendications 1 à 4, **caractérisé en ce qu'**une pompe à engrenages munie de dents à l'intérieur ou à l'extérieur, compensée ou non compensée, une pompe à piston axial ou radial constante ou réglable, une pompe à cellules semi-rotative constante ou réglable, une pompe à vis ou une autre unité volumétrique hydrostatique, est installée.

13. Dispositif selon l'une des revendications 1 à 12, destiné au réglage du profil de vitesse et/ou de déplacement d'une masse mobile (m) sur un ou plusieurs arbres, par exemple l'arbre de fermeture d'une presse d'injection à l'aide de la pression agissant du côté de la pompe et du côté opposé, **caractérisé en ce qu'**on utilise comme grandeur de réglage la pression hydraulique du liquide en prenant en compte les pressions du côté pression tout comme du côté contre-pression, le dispositif de réglage étant configuré de préférence comme un dispositif de réglage à variables multiples pour la pression, la vitesse et la position ou commande les arbres.

## Fig.1

EP 0 782 671 B2

Fig.2

Fig.2a

Fig.3

Fig.3a

Fig.4

Fig. 5

Fig. 5a

Fig. 6

Fig. 7

EP 0 782 671 B2

Fig.8

Fig.9

Fig.10

Fig.11

**Fig. 12**

EP 0 782 671 B2